(19) Europäisches Patentamt
European Patent Office
Office européen des brevets

(11) **EP 4 701 023 A1**

(12) **EUROPEAN PATENT APPLICATION**

(43) Date of publication:
**25.02.2026 Bulletin 2026/09**

(21) Application number: **24195462.7**

(22) Date of filing: **20.08.2024**

(51) International Patent Classification (IPC):
**H02J 3/26** (2026.01)     **H02J 3/38** (2026.01)
**H02M 7/5387** (2007.01)

(52) Cooperative Patent Classification (CPC):
**H02J 3/26; H02J 3/38; H02M 7/53875**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Hitachi Energy Ltd
8050 Zürich (CH)**

(72) Inventors:
• **JIANG, Wen
  Beijing 102218 (CN)**
• **HUANG, Xing
  Beijing 100024 (CN)**

(74) Representative: **Vossius & Partner
Patentanwälte Rechtsanwälte mbB
Siebertstrasse 3
81675 München (DE)**

(54) **GRID FORMING CONTROL OF VOLTAGE SOURCE CONVERTER UNDER UNBALANCED AC SYSTEM**

(57) The disclosure provides a method for controlling a power converter, wherein the method comprises: obtaining a first signal set comprising first phase signals at a port of the power converter; generating a second signal set comprising second phase signals based on the first signal set, wherein each second phase signal of the second signal set comprises a phase shift relative to a corresponding first phase signal of the first signal set; separately transforming each of the first phase signal and the corresponding second phase signal to generate a constant first intermediate signal set; and controlling the power converter based on the constant first intermediate signal set.

Fig. 2

**Description**

The present disclosure relates to a method for controlling a power converter and the power converter.

With the increase of the renewable energy penetration, electronic power converters are widely used to interface energy generation with power systems, the majority of which are voltage source converters (VSCs), which can be of two types: grid-following (GFL) VSCs that control the magnitude and orientation of their filter output current with respect to the voltage at the point of coupling (PCC) and grid-forming (GFM) VSCs that control output voltage and frequency at their filter output. The GFM VSCs can provide voltage and frequency support and provide "virtual inertia and damping" to the grid as a synchronous generator, which can improve the renewable energy penetration and system stability in weak grids.

The GFM control method and stability assessment is conducted in literature so far, under the assumption of balanced operating conditions. Stability in unbalanced power systems has deserved little attention in the literature. However, distribution networks and, amongst these, microgrids are often unbalanced due to uneven distribution of generation and/or load across the three-phases. The system unbalances can significantly deteriorate the system performance and even induce instability. Thus, the modeling of converter system and stability analysis under unbalanced AC system is quite important to fully understand the characteristics of the system, and afterwards a robust GFM control to enhance system performance is quite essential.

There are technical challenges. First, the synchronously rotating reference frame after Park transformation is commonly used for balanced three-phase systems to transform a three-phase balanced sinusoidal signal into two constant dq components. However, it is not feasible to directly apply the conventional dq transformation on the unbalanced system since the Park transformation will not give constant state variables in steady state. An improvement in this disclosure is the development of a generalized transformation to take care of the unbalanced three-phase system.

Second, there are already plenty of control algorithms to achieve grid following (GFL) and grid forming control (GFM) control for balanced AC system. However, they are not fully applicable when the AC system is three-phase unbalanced, especially when the converters are in parallel operation, to fulfill the requirements such as the individual sequence control, voltage/current balancing, negative/zero sequence current equally sharing between paralleled converters, etc. Another improvement in this disclosure is the development of a specific GFM control of VSCs under an unbalanced AC system.

The above-mentioned disadvantages are at least partly overcome and/or above-mentioned advantages are at least partly achieved with the features of the independent claims. Dependent claims define preferred embodiments of the disclosure.

The present disclosure also relates to a method for controlling a power converter, wherein the method comprises: obtaining a first signal set comprising first phase signals at a port of the power converter; generating a second signal set comprising second phase signals based on the first signal set, wherein each second phase signal of the second signal set comprises a phase shift relative to a corresponding first phase signal of the first signal set; separately transforming each of the first phase signal and the corresponding second phase signal to generate a constant first intermediate signal set; and controlling the power converter based on the constant first intermediate signal set.

An example of the constant first intermediate signal set can be seen in equation (7) at the end of the description. The constant first intermediate signal set may be in the phasor ABC reference frame explained later. The "controlling the power converter based on the constant first intermediate signal set" comprise transforming the information (back) into the abc reference frame. An example of the "separately transforming each of the first phase signal and the corresponding second phase signal to generate a constant first intermediate signal set" can be seen in the transformation matrix of equation (8) at the end of this disclosure. Generally and as can be seen in equation (8), each part of the first signal set together with the corresponding part of the second signal set are separately transformed without influence from the other parts (of the first and second signal set). Hence, there is no interaction between the different parts in this reference frame. In the example of equation (8), this can be seen by the "0" values which would correspond to combining different parts of the first and second signal sets. These separate transformations may be implemented in one calculation step (as in the example of equation (8)) or in separate calculation steps. The separate calculation steps may be separated by the different parts. This may mean that the first parts of the first and second signal sets are first calculated. Then the second parts of the first and second signal sets may be calculated. Finally, the third parts of the first and second signal sets may be calculated. Different orders are possible.

This may require less processing operation. This transformation (regarding the phasor ABC transformation - see also further description for nomenclature) is easy to model, especially for electrical circuits with missing phases. Hence, it may reduce processing power. In some embodiments, system performance may be improved by inducing stability.

Various embodiments may preferably implement the following features.

Preferably, the power converter is a voltage source converter, VSC.

The transformation of this disclosure may (alternatively) be applied to other types of converters.

Preferably, the VSC is a grid-forming, GFM, VSC.

In an alternative, the converter is a grid-following (GFL) converter.

Preferably, the first signal set is unbalanced in amplitudes and/or phase shift.

Unbalanced may mean that the amplitudes are different and/or that the phase shift is not 120° (for three phases). The grid impedance may be unbalanced.

Preferably, the phase shift is $\pi/2$ for the each second phase signals relative to the corresponding first phase signal.

An example of this is shown in equations (2) and (3) at the end of this disclosure.

Preferably, the first signal set is expressed as

$$\begin{bmatrix} \tilde{x}_a(t) \\ \tilde{x}_b(t) \\ \tilde{x}_c(t) \end{bmatrix} = \begin{bmatrix} X_a \cdot cos\left(\omega t + \varphi_{a0}\right) \\ X_b \cdot cos\left(\omega t + \varphi_{b0}\right) \\ X_c \cdot cos\left(\omega t + \varphi_{c0}\right) \end{bmatrix};$$

the second signal set is expressed as

$$\begin{bmatrix} \tilde{x}_a\left(t - \frac{\pi}{2\omega}\right) \\ \tilde{x}_b(t - \frac{\pi}{2\omega}) \\ \tilde{x}_c(t - \frac{\pi}{2\omega}) \end{bmatrix} = \begin{bmatrix} X_a \cdot cos\left(\omega t + \varphi_{a0} - \frac{\pi}{2}\right) \\ X_b \cdot cos\left(\omega t + \varphi_{b0} - \frac{\pi}{2}\right) \\ X_c \cdot cos\left(\omega t + \varphi_{c0} - \frac{\pi}{2}\right) \end{bmatrix};$$

a matrix for separately transforming each of the first phase signal and the corresponding second phase signal to generate a constant first intermediate signal set is expressed as

$$T_{abc2ABC} = \begin{bmatrix} cos\left(\omega t\right) & sin\left(\omega t\right) & 0 & 0 & 0 & 0 \\ -sin\left(\omega t\right) & cos\left(\omega t\right) & 0 & 0 & 0 & 0 \\ 0 & 0 & cos\left(\omega t\right) & sin\left(\omega t\right) & 0 & 0 \\ 0 & 0 & -sin\left(\omega t\right) & cos\left(\omega t\right) & 0 & 0 \\ 0 & 0 & 0 & 0 & cos\left(\omega t\right) & sin\left(\omega t\right) \\ 0 & 0 & 0 & 0 & -sin\left(\omega t\right) & cos\left(\omega t\right) \end{bmatrix};$$

and the matrix is applied on a combined vector of the first signal set and the second signal set, which is expressed as

$$\begin{bmatrix} \tilde{x}_a(t) \\ \tilde{x}_a\left(t - \frac{\pi}{2\omega}\right) \\ \tilde{x}_b(t) \\ \tilde{x}_b(t - \frac{\pi}{2\omega}) \\ \tilde{x}_c(t) \\ \tilde{x}_c(t - \frac{\pi}{2\omega}) \end{bmatrix} = \begin{bmatrix} X_a \cdot cos\left(\omega t + \varphi_{a0}\right) \\ X_a \cdot cos\left(\omega t + \varphi_{a0} - \frac{\pi}{2}\right) \\ X_b \cdot cos\left(\omega t + \varphi_{b0}\right) \\ X_b \cdot cos\left(\omega t + \varphi_{b0} - \frac{\pi}{2}\right) \\ X_c \cdot cos\left(\omega t + \varphi_{c0}\right) \\ X_c \cdot cos\left(\omega t + \varphi_{c0} - \frac{\pi}{2}\right) \end{bmatrix};$$

wherein $X_a$, $X_b$, $X_c$ are the amplitudes of phases a, b and c respectively, $\omega$ is a common frequency, $\varphi_{a0}$, $\varphi_{b0}$, $\varphi_{c0}$ are initial phase angles of phases a, b and c respectively.

The matrixes may be multiplied by constants and still fulfill the purpose of this disclosure.

Preferably, the first intermediate signal set comprises six phasor components.

Preferably, the six phasor components have constant amplitudes and constant phase angles.

Preferably, constant amplitudes and constant phase angles comprises the amplitudes and phase angles to not change with respect to time in a certain time period. Preferably, they never change.

This definition of "constant" may also apply to constant first intermediate signal set and other signals.

Preferably, the first signal set comprises a three-phased phase voltage, a three-phased line voltage, a three-phased phase current or a three-phased line current of an alternating current, AC, system.

The AC system may be a grid or an islanding mode.

Preferably, the constant first intermediate signal set establishes a first intermediate signal.

The present disclosure also relates to a computer program comprising instructions which, when the computer program is executed by a computer, cause the computer to carry out the method explained above and the methods explained in this disclosure.

The present disclosure also relates to a power converter configured to implement the method explained above and the methods explained in this disclosure.

The present disclosure also relates to a converter controller for a power converter system, the converter controller comprising: a first control loop comprising a first voltage controller and a first current controller; a second control loop comprising a second voltage controller and a second current controller; a third control loop comprising a third voltage controller and a third current controller; and a power controller configured to generate a symmetrical virtual voltage emulating behaviour of a synchronous system and configured to provide information about the symmetrical virtual voltage emulating behaviour to the first control loop, the second control loop and the third control loop.

The converter controller may be configured to provide symmetrical six-dimensional voltage reference to converter modulation directly. The (one common) power controller may be implemented as one part, for example as one chip.

The setup of the disclosure may need less parts because the power converter provides information to all three control loops. There is no need for separate power converters for each control loop. In an embodiment, there are no further power converters other than the one. This may be cost effective and easier to assemble, among other advantages.

In some embodiments, there may be one (common) power controller and (three) virtual admittance/virtual impedance/voltage control and (three) voltage/current controllers. In some embodiments, there may be supplementary balancing/compensate control with one of the above mentioned setups.

Preferably, the first control loop is configured to control a first sequence component and a second sequence component of a reference frame of an alternating current, AC, power voltage and/or current, the second control loop is configured to control a third sequence component and a fourth sequence component of the reference frame, and the third control loop is configured to control a fifth sequence component and sixth sequence component of the reference frame.

The reference frame may be a six-dimensional reference frame.

Preferably, the first and second sequence components are positive sequence components, wherein the third and fourth sequence components are negative sequence components, and wherein the fifth and sixth sequence components are zero sequence components.

This may be the dual-dq0 reference frame mentioned in this disclosure.

Preferably, the first and second sequence components are phasor components of a first phase of an AC system, wherein the third and fourth sequence components are phasor components of a second phase of the AC system, and wherein the fifth and sixth sequence components are phasor components of a third phase of the AC system.

This may relate to the phasor ABC reference frame mentioned in this disclosure. In this case, the first phase may be phase A, the second phase may be phase B and the third phase may be phase C. In an alternative of the dual-dq0 reference frame, the first phase may be positive, the second phase negative and the third phase zero.

Preferably, the first control loop, the second control loop and the third control loop are connected in parallel.

Preferably, the converter controller is configured to receive a first signal which is unbalanced in amplitudes and/or phase shift.

Preferably, the converter controller further comprises a phased locked loop, PLL.

Preferably, at least one of the first voltage controller, the second voltage controller and the third voltage controller is a virtual admittance.

Preferably, the information about the symmetrical virtual voltage emulating behaviour is based on information comprising a current measurement and/or a voltage measurement of an AC system.

The present disclosure also relates to a power converter system comprising two converter units connected in parallel at a side configured to connect to an AC system, each converter unit comprising a converter controller according to any one of claims 1 to 9.

Preferably, the power converter further comprises a secondary controller configured to provide balancing references to each of the converter controllers.

This may improve balancing between different converter controllers (or rather between unbalanced voltages/-currents).

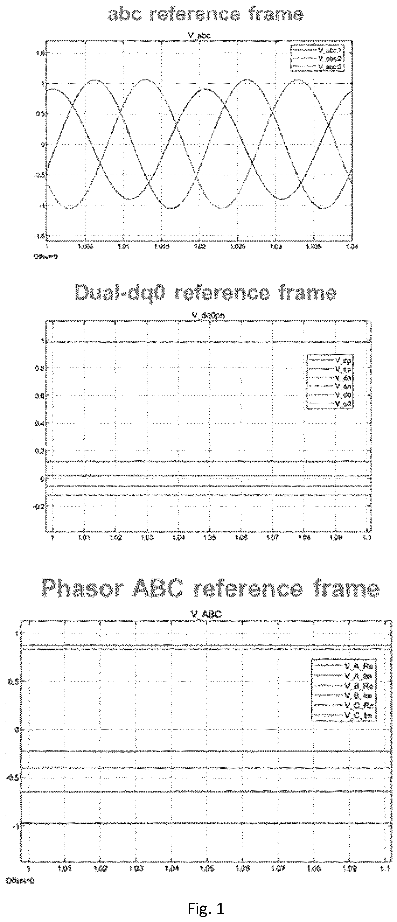

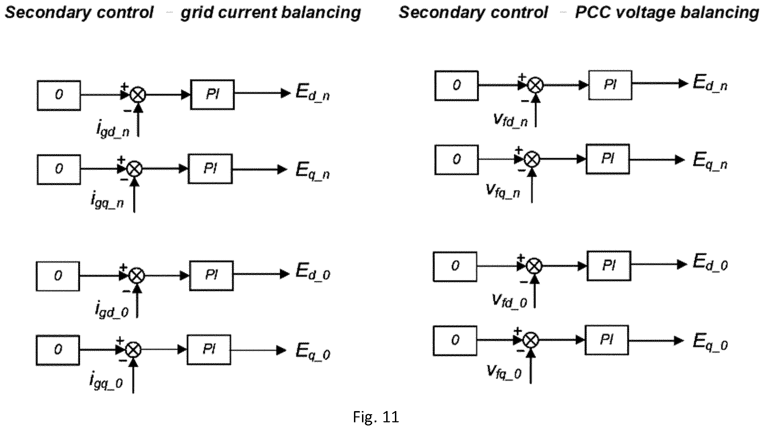

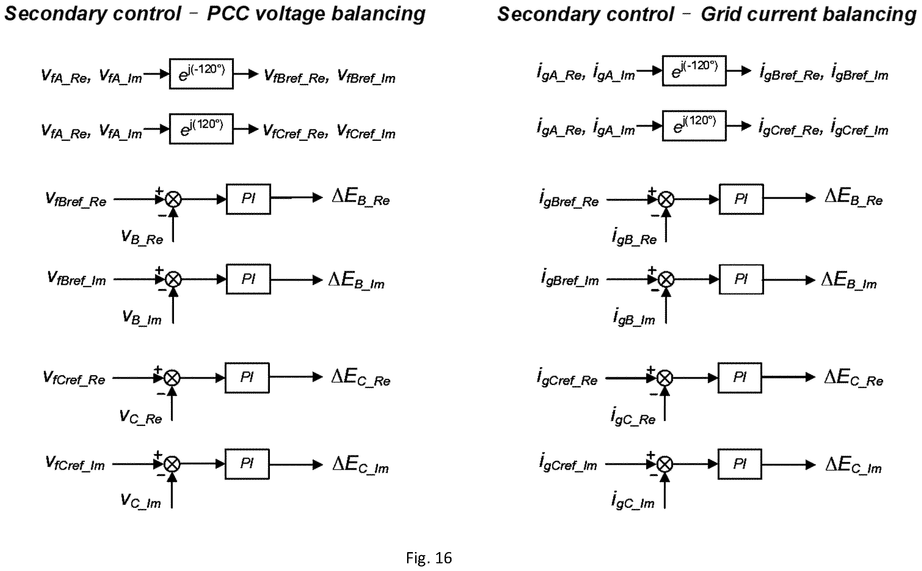

The converter with grid forming capability will generate a symmetrical voltage signal to the first control loop, the second control loop and the third control loop. In conventional embodiments, when there is an unbalanced load connected at PCC, the PCC voltage/converter output current/grid current will all be unbalanced. The balancing control by the secondary controller may give supplementary voltage references added to the symmetrical voltage signals (as also illustrated in fig. 1). The input to the secondary controller may be voltage or current. If it is desired to balance PCC voltage, then the PCC voltage measurement is sent to secondary controller and the secondary controller generates additional voltage references added to the symmetrical voltage signals. When it is desired to balance the grid current, then the grid current measurement is sent to the secondary controller to generate additional voltage references added to the symmetrical voltage signal (as also illustrated in figs. 11 and 16).

Preferably, each of the converter units further comprises a direct current to alternating current converter and/or an alternating current to direct current converter, an alternating current filter, and a current measuring unit and a voltage measurement unit which are configured to send measurements to the converter controller.

The direct current to alternating current converter and/or alternating current to direct current converter may be one converter. For example in a battery energy storage system (BESS), the converter may be used as alternating current to direct current converter during charging and as direct current to alternating current converter during discharging (use). It is possible that only one of the current measuring unit and the voltage measurement unit sends measurements to the converter controller.

Preferably, the power converter system is a voltage source converter, VSC.

The present disclosure also relates to a method for providing voltage signals in an alternating current system, the method comprising: generating, by a power controller, a symmetrical virtual voltage emulating behaviour of a synchronous system; providing, by the power controller, information about the symmetrical virtual voltage emulating behaviour to a first control loop, a second control loop and a third control loop; and providing voltage by the first control loop, the second control loop and the third control loop.

The present disclosure also relates to a computer program comprising instructions which, when the computer program is executed by a computer, cause the computer to carry out the method as described above and/or as described in this disclosure.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.

Fig. 1 shows signals according to the unbalanced three-phase signal in abc (top), Dual-dq0 (middle) and Phasor-ABC reference frames (bottom).

Fig. 2 shows the configuration of a converter system to apply the disclosure.

Fig. 3 shows an overview of a grid forming control for the unbalanced converter system in Dual-dq0 reference frame according to one embodiment.

Fig. 4 shows a PLL in a converter system (for an unbalanced grid) in Dual-dq0 reference frame.

Fig. 5 shows an overview of a grid forming control for the unbalanced converter system in Phasor-ABC reference frame according to one embodiment.

Fig. 6 shows a PLL in a converter system (for an unbalanced grid) in Phasor-ABC reference frame.

Fig. 7 shows an equivalent main circuit and nomenclature.

Fig. 8 shows a PLL.

Fig. 9 shows elements for transformations between main circuit and controller.

Fig. 10 shows a GFM controller connected to an unbalanced AC system in the Dual-dq0 reference frame.

Fig. 11 shows secondary control: grid current balancing (left) and PCC voltage balancing (right).

Fig. 12 shows a converter current limiting method for each sequence according to an embodiment of the disclosure.

Fig. 13 shows a PLL.

Fig. 14 shows transformers for transformations between main circuit and controller.

Fig. 15 shows a GFM controller connected to an unbalanced AC system in the Phasor-ABC reference frame.

Fig. 16 shows secondary control: grid current balancing (left) and PCC voltage balancing (right).

Fig. 17 shows a converter current limiting method for each phase according to an embodiment of the disclosure.

This disclosure shows two generalized transformations to decompose an unbalanced three-phase sinusoidal signal into 6-dimension time invariant quantities, thus allowing small-signal analysis on an unbalanced system, as well as the controller design and optimization. Based on the proposed transformations, this disclosure further proposes two grid forming control methods for VSC under unbalanced AC (alternating current) system. With the proposed grid forming control, the converter(s) under unbalanced AC system can operate with grid forming capability either in grid-connected mode or islanded mode, with ensuring the grid current balancing or PCC voltage balancing. The equally power sharing between paralleled converters is also achieved. In islanded mode, the grid may be a small electric network (small compared to national electric networks) and/or a closed electric network.

## 1. Disclosure Description

### 1.1 Disclosure 1: generalized transformation of unbalanced power conversion circuit

This disclosure proposes two generalized transformations to decompose an unbalanced three-phase sinusoidal signal into 6-dimension time invariant quantities, thus allowing the use of small-signal analysis on an unbalanced system (grid), as well as the controller design and optimization.

For better understanding, the following definitions are drawn:

- "abc reference frame": the stationary reference frame with three-phase sinusoidal signal. This may be the directly measured signal. This reference frame has phases/sequence components a, b and c.
- "Phasor-ABC reference frame": the proposed virtual reference frame in which the three-phase sinusoidal signal is decomposed into a 6-dimentional phasor component. This reference frame has phases/sequence components A, B and C (capital letters).
- "Dual-dq0 reference frame": the proposed virtual reference frame in which the three-phase sinusoidal signal is decomposed into a 6-dimentional dq component. This reference frame has the phases/sequence components positive (p), negative (n) and zero (0). This reference frame is sometimes abbreviated with "PNZ".

The developed transformation matrixes will enable the free transformation among three-phase AC signal, Dual-dq0 components and Phasor-ABC components. A detailed expression of the transformation matrixes is at the end of this description.

By the defined Dual-dq0 transformation or Phasor-ABC transformation, the unbalanced three-phase time-varying signals can be decomposed into 6-dimensional time invariant signals, as shown in Fig. 1, thus allowing for small-signal modelling and controller design.

Fig. 1 shows signals according to the unbalanced three-phase signal in abc (top), Dual-dq0 (middle) and Phasor-ABC reference frames (bottom). For each graph, the x-axis represents time and the y-axis represents voltage.

### 1.2 Disclosure 2: grid forming control of VSC under unbalanced AC system

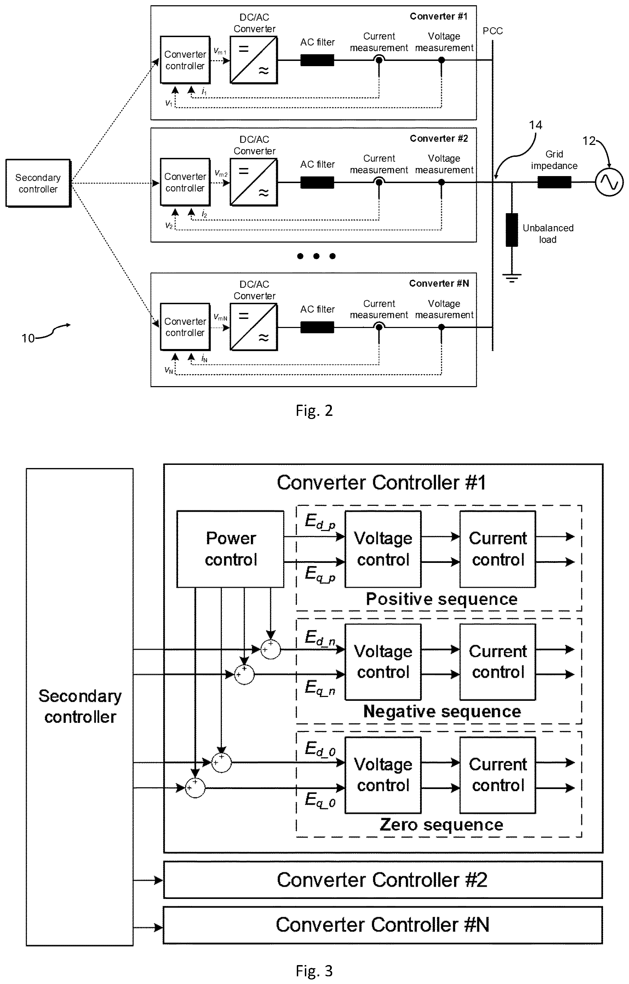

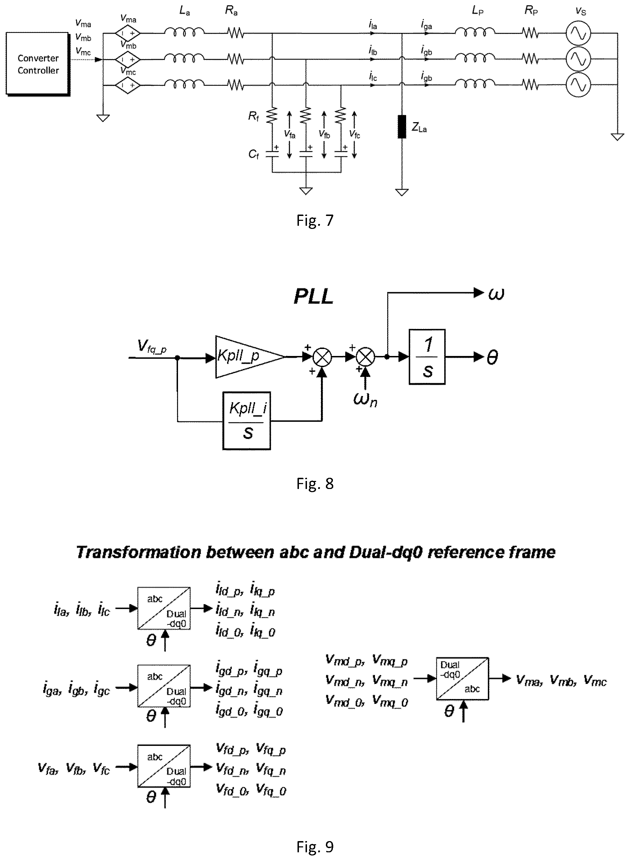

This disclosure proposes a grid forming (GFM) control of VSC connected to an unbalanced AC system. Fig. 2 shows the configuration of a converter system 10 (also: Power converter system) to apply this disclosure. The Power converter system 10 comprises N converters (converter #1 to converter #N), a secondary controller, an unbalanced load connected to ground, a grid impedance and a connection to a grid 12 (and possibly the grid itself). The N (N>=1) converters may be paralleled (in parallel connection) at their AC side at PCC 14 (point of common coupling). Each converter comprises a DC/AC converter (and/or AC/DC converter; DC = direct current), an AC filter, current and voltage measurements ($v_1$, $i_1$, or the corresponding different index according to the converter #) which are sent to the converter controller of the corresponding converter and the converter controller will output an AC voltage to integrate with a main power circuit (see fig. 7). Each converter may further comprise a converter controller. The DC/AC converter may be a voltage source converter. The AC filter can be L filter, LC filter, LCL filter, etc. The current and voltage measurements may be determined case by case.

The converter system 10 may be connected to an unbalanced AC system (grid 12). The converter system 10 may be connected to the grid 12, or optionally, the converter system can operate in islanding mode. The unbalanced state of the AC system is caused by unbalanced grid impedance or unbalanced load.

The proposed grid forming control may be applied in the individual converter controller without communication between each other. The optional secondary controller may have relative slow control speed compared to the converter controller for supplementary balancing control. The secondary controller can send references simultaneously to the paralleled converters as a master to avoid asynchronization between the converters.

Fig. 3 shows an overview of a grid forming control for the unbalanced converter system in Dual-dq0 reference frame according to one embodiment. The grid forming control comprises (N) converter controller and an optional secondary controller (both may be same or similar as in fig. 2). The converter controller may be further connected as shown in and for fig. 2. In a preferred embodiment is N = 3. Each converter controller comprises a power control loop (in fig. as power control, also called power controller), several voltage control loop (in fig. as voltage control; one for each sequence) and several current control loop (in fig. as current control; one for each sequence). The converter controller #2 to #N may comprise the same setup as converter controller #1. Each set of voltage control loop and current control loop may together be a control loop (shown as boxes with dashed lines; the control loops may comprise further parts). Each converter controller comprises three control loops in a preferred embodiment. The power control loop may generate a symmetrical virtual back EMF (electromotive force) voltage to emulate the behavior of a synchronous generator/machine (grid), i.e., with only positive sequence components ($E_{d\_p}$, $E_{q\_p}$ in fig. 3) and without negative and zero components ($E_{d\_n} = E_{q\_n} = E_{d\_0} = E_{q\_0} = 0$). The back EMF voltage can be given as a reference directly to the modulation or to cascaded voltage and current control loops (the control loops). Optionally, there is a droop control before the power control in islanded operation. There are individual voltage control loops for positive, negative and zero sequences. The voltage control loop can be voltage control, virtual admittance, current reference generation, etc. There are individual current control loops for positive, negative and zero sequences to control the individual sequence currents including current limitation. In certain embodiments, it is possible to omit either the voltage control loops or the current control loops.

Optionally, there is a secondary controller (comprised by the grid forming control; may be the same secondary controller as in fig. 2) with relative slow control speed compared to the converter controller for supplementary balancing control. It can be either grid current balancing or PCC voltage balancing control under unbalanced load. The secondary controller will send supplementary negative and zero sequence EMF voltage references simultaneously to the paralleled converter controllers. The back EMF voltage of the power control loop may be mixed (for example added or averaged) with the signal from the secondary controller. The signal from the secondary controller may only influence the second and third control loop.

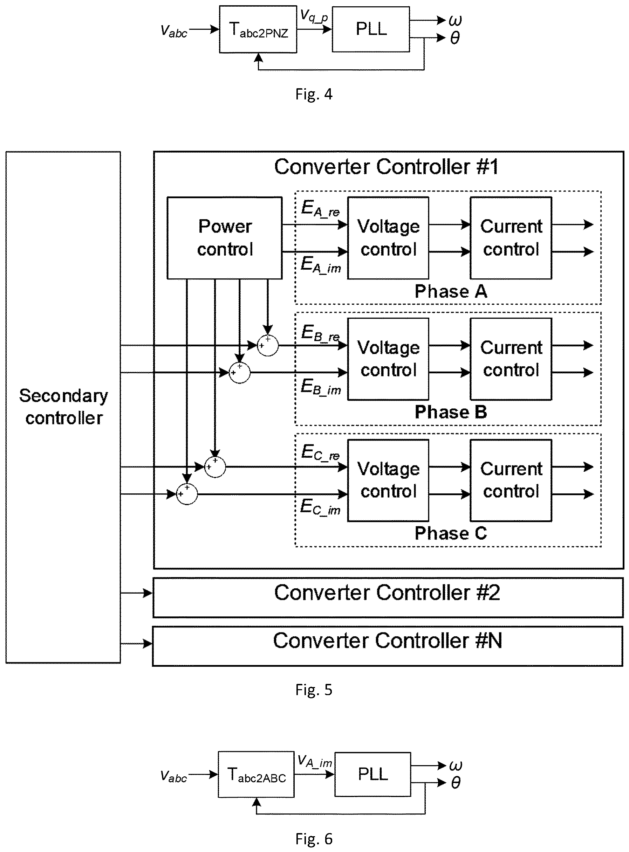

Fig. 4 shows a PLL in a converter system (for an unbalanced grid) in Dual-dq0 reference frame.

Optionally, there is a PLL (phase locked loop) in the GFM controller, as shown in Fig. 4. The PLL is used to synchronize with positive sequence of PCC voltage. The output are frequency ($\omega$) and angle ($\theta$) using by controller to synchronize with grid, where $\theta$ is used for transformation between abc reference frame and Dual-dq0 reference frame. The angle ($\theta$) may be provided to transformation matrices (see fig. 9) and reverse transformation matrices. The measured voltage and current signal may be in the abc reference frame, and may be transformed to PNZ components to be used by the control loops. The obtained voltage after the control loops may be in PNZ and may be transformed to the abc reference frame to send to modulation. PLL may providing angle ($\theta$) to the transformation and reverse transformation.

Figs. 5 and 6 show similar parts as figs. 3 and 4 but for the phasor ABC reference frame.

Fig. 5 shows an overview of a grid forming control for the unbalanced converter system in Phasor-ABC reference frame according to one embodiment. The grid forming control comprises (N) converter controller and an optional secondary controller (both may be same or similar as in fig. 2). The converter controller may be further connected as shown in and for fig. 2. In a preferred embodiment is N = 3. Each converter controller comprises a power control loop (in fig. as power control, also called power controller), several voltage control loop (in fig. as voltage control; one for each sequence) and several current control loops (in fig. as current control; one for each sequence). The converter controller #2 to #N may comprise the same setup as converter controller#1. Each set of voltage control loop and current control loop may together be a control loop (shown as boxes with dashed lines; the control loops may comprise further parts). Each converter controller comprises three control loops in a preferred embodiment. The power control loop may generate a symmetrical virtual back EMF voltage to emulate the behavior of a synchronous generator/machine (grid), i.e., the three phase voltages have equal amplitude and phase shifts of $2/3\pi$ between each other ($(V_{A\_re}+j_{VA\_im}) = (V_{B\_re}+j_{VB\_im})^*e^{-j2/3\pi} = (V_{C\_re}+j_{VC\_im})^*e^{j2/3\pi}$). The back EMF voltage can be given as a reference directly to the modulation or to cascaded voltage and current control loops (the control loops). Optionally, there is a droop control before the power control in islanded operation. There are individual voltage control loops for phase A, B and C. The voltage control loop can be voltage control, virtual admittance, current reference generation, etc. There are individual current control loops for each of phases A, B and C to control the individual phase current including current limitation.

Optionally, there is a secondary controller (comprised by the grid forming control; may be the same secondary controller as in fig. 2) with relative slow control speed compared to the converter controller for supplementary balancing control. It can be either grid current balancing or PCC voltage balancing control under unbalanced load. The secondary controller may send supplementary EMF voltage references to phase B and C simultaneously to the paralleled converter controllers. The back EMF voltage of the power control loop may be mixed (for example added or averaged) with the signal from the secondary controller. The signal from the secondary controller may only influence the second and third control loop.

Fig. 6 shows a PLL in a converter system (for an unbalanced grid) in Phasor-ABC reference frame.

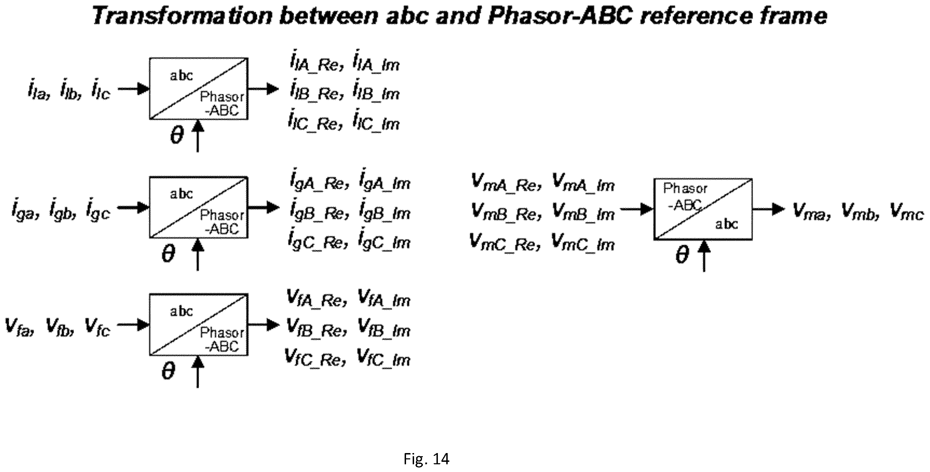

Optionally, there is a PLL in the GFM controller, as shown in Fig. 6. The PLL is used to synchronize with phase A of PCC voltage. The output are frequency ($\omega$) and angle ($\theta$) using by controller to synchronize with grid, where $\theta$ is used for transformation between abc reference frame and Phasor-ABC reference frame. The angle ($\theta$) may be provided to transformation matrices (see fig. 14) and reverse transformation matrices. The measured voltage and current signal may be in the abc reference frame, and may be transformed to the Phasor-ABC reference frame components to be used by the control loops. The obtained voltage after the control loops may be in the Phasor-ABC reference frame and may be transformed to the abc reference frame to send to modulation. PLL may providing angle ($\theta$) to the transformation and reverse transformation.

## 1.3 Implementation examples

In this section, the implementation examples of the proposed GFM control under an unbalanced AC system are given.

Fig. 7 shows an equivalent main circuit and nomenclature. Fig. 7 shows an example 3-phase converter system (configured to be) integrated to the grid 12, where $v_{mabc}$ (short for: $v_{ma}$, $v_{mb}$ and $v_{mc}$) is the converter output AC voltage, $L_a$, $R_a$ are the converter side inductor and its resistance, $C_f$, $R_f$ are the filter capacitor and its resistance. The grid is modelled by an ideal voltage source $v_s$ with a serial grid impedance $L_P$, $R_P$. The grid 12 is shown in three phases. For simplicity, the reference signs for the grid 12 and the phases of the grid 12 are not distinguished.

The measurements from the main circuit (may be measurements from current measurement and voltage measurement as shown in and for fig. 2) are PCC voltages $v_{fa}$, $v_{fb}$, $v_{fc}$, converter output currents $i_{ia}$, $i_{ib}$, $i_{ic}$ and grid currents $i_{ga}$, $i_{gb}$, $i_{gc}$. An unbalanced load is connected to PCC, such as (and represented by) a single-phase load $Z_{La}$. With this exemplary system, the grid forming control methods may be explained using the former generalized transformations, illustrated in the following paragraphs.

## 1.3.1 Grid forming control in Dual-dq0 reference frame

This section describes the grid forming (GFM) controller connected to an unbalanced AC system in the Dual-dq0 reference frame. The current and voltage measurements (may be measurements from current measurement and voltage measurement as shown in and for fig. 2) from the main power circuit in the power converter system are transformed to 6-dimensional positive, negative and zero sequence dq components, based on which the GFM controller is developed.

Fig. 8 shows a PLL. It may show a more detailed version of the PLL of fig. 4.

$\omega_n$ is the nominal angle frequency. $\omega_n$=2*pi*f. For an exemplary 50Hz AC system, $\omega_n$=100pi; For an exemplary 60Hz AC system, $\omega_n$=120pi. Kpll_p and Kpll_i are the gain of the PI (proportional integral) controller. The control parameters may be tuned to have good system stability and dynamics.

Fig. 9 shows transformers for transformations between main circuit and controller. The transformers may transform between the reference system according to the formulas as shown in the end of this description.

The PLL in the GFM controller is used to synchronize with positive sequence of PCC voltage, as shown in fig. 8. The q part of the positive phase of the voltage signal may be input. The output are frequency ($\omega$) and angle ($\theta$) used by the controller to synchronize with the grid, where $\theta$ is used for transformation between abc reference frame and Dual-dq0 reference frame (the angle ($\theta$) may be equal to $\omega$*t). The voltage and current measurements from the main circuit are in abc reference frame, which should be transformed to Dual-dq0 reference frame for controller design; on the other hand, the converter output voltage is in Dual-dq0 reference frame which should be transformed to abc reference frame to integrate with main circuit, as shown in fig. 9. The zero sequence is synchronous rotating with the positive sequence, while negative sequence is reverse rotating with the positive sequence. Once the rotating frame for positive sequence is synchronized, the rotating frames for negative and zero sequence are also determined.

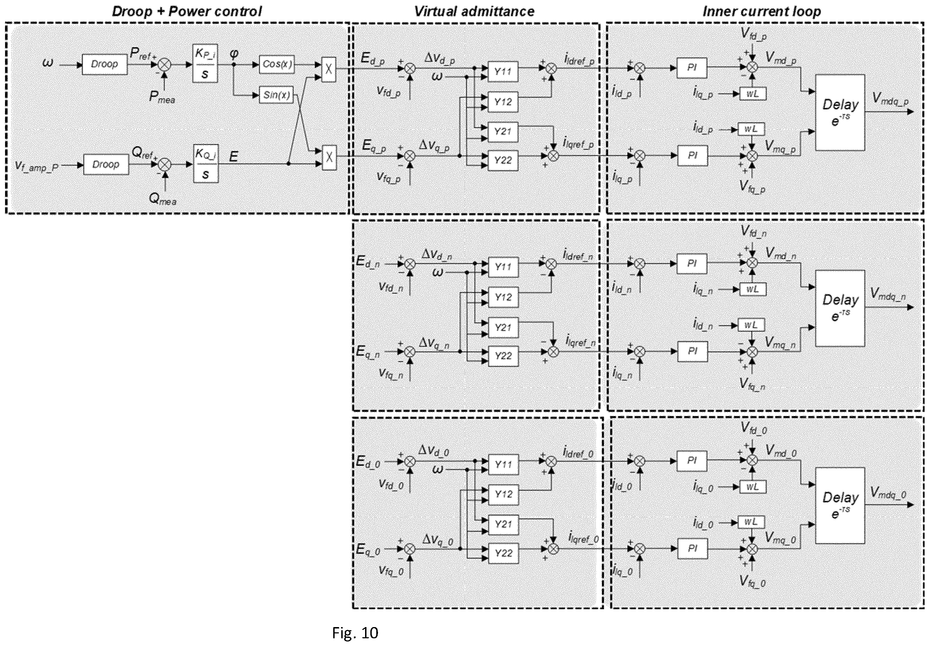

Fig. 10 shows a GFM controller connected to an unbalanced AC system in the Dual-dq0 reference frame. The positive sequence adopts the GFVCC control (Grid forming vector current control). It consists of a power loop ("Power control"; may be same power control as in figs. 3 and 5) generating virtual back EMF voltage ($E_{d\_p}$, $E_{q\_p}$, $E_{d\_n}$, $E_{q\_n}$, $E_{d\_0}$, $E_{q\_0}$,), followed by a virtual admittance seen from PCC and an inner current loop. The virtual admittance may be the voltage controller described before. A droop control ahead the power loop is preferable if the converter is in islanded operation. The GFM converter normally emulates a symmetrical virtual back EMF voltage without the negative and zero components, just like a synchronous generator. Thus, the negative and zero sequence EMF voltage is set to 0 ($E_{d\_n}=E_{q\_n}=E_{d\_0}=E_{q\_0}=0$). Furthermore, there are also a virtual admittance and inner current loop for negative and zero sequences. The negative/zero sequence virtual admittance is used to realize the accurate negative/zero sequence current sharing among the parallel operated GFM converters, regardless of the difference between the LC filters. The inner current loops are used to control the individual sequence currents.

Input to the power control may be based on values output by the droop control. The power references ($P_{ref}$, $Q_{ref}$) may come from grid dispatching or droop control in islanded operation. Note that the power references are the reference value of three phases. E and $\varphi$ may be generated back EMF voltage from the power loop. $P_{ref}$ may be active power reference. $P_{mea}$ may be active power measurement, based on the measured voltage and current. $Q_{ref}$ may be reactive power reference. $Q_{mea}$ may be reactive power measurement, based on the measured voltage and current. $K_{P\_i}$ may be Integral control gain for P. $K_{Q\_i}$ may be Integral control gain for Q. $V_{f\_amp\_p}$ may be positive sequence voltage amplitude, exemplarily $V_{f\_amp\_p} = sqrt(V_{fd\_P}^2 + V_{fq\_P}^2)$.

The back EMF voltage output by the power control may be input to the virtual admittance. The virtual admittance may also be provided (input) with voltage measurements ($v_{fd\_p}$, etc.; measurements may be acquired as shown in figs. 2 and 7) and frequency ($\omega$) which may be provided by the PLL. The virtual admittance outputs reference current values ($i_{lref\_p}$, etc.) to the inner current loop (where it is used as input). The inner current loop may also be provided (input) with current measurements ($i_{ld\_p}$, etc.; measurements may be acquired as shown in figs. 2 and 7). The inner current loop then outputs the converter output AC voltage ($V_{mdq\_p}$, $V_{mdq\_n}$, $V_{mdq\_0}$). This may be further converted to the abc reference frame to make the converter output AC voltage in the abc reference frame ($V_{mabc}$). The inner current loop comprises a delay part. The 'delay' refers the time delay between the output and input signal, which is caused by the measurement delay, signal transport, and controller computation, modulation, etc. Here a total time delay is applied to modulation voltage $V_m$ considering all the delays together. T may be time in seconds. s may be the Laplace operator.

Grid forming vector current control (GFVCC) system is configured to emulate a virtual synchronous machine (VSM). The disclosed system comprises a droop control unit, a current control unit, a virtual admittance unit and a phase locked loop (PLL) unit. The virtual admittance unit and the PLL unit are configured to emulate an inertia of the VSM.

It shall be noted that, the rotating frame of negative sequence may be different from positive/zero sequence, the decoupling terms (i.e., $j\omega L \cdot i$; represented in fig. 10 by the two white boxes with "wL" written in them) in the negative sequence have been adjusted, both in the virtual admittance and current loop.

With this GFM controller connected to an unbalanced AC system, the converter will emulate a symmetrical AC voltage no matter how imbalanced the grid is. This is the basic GFM control algorithm. If the converter is required to further compensate an unbalanced load current to ensure a balanced grid current or balanced PCC voltage, a supplementary secondary control may also be equipped as shown in Fig. 11. The secondary control can be either a grid current balancing control or a PCC voltage balancing control (see also fig. 11). In the grid current balancing control, the negative and zero sequence grid currents may be controlled to zero ($i_{gd\_n} = i_{gq\_n} = i_{gd\_0} = i_{gq\_0} = 0$) to generate negative/zero sequence EMF voltage references. In the PCC voltage balancing control, the negative and zero sequence PCC voltages may be controlled to zero ($v_{fd\_n} = V_{fq\_n} = v_{fd\_0} = V_{fq\_0} = 0$) to generate negative/zero sequence EMF voltage references instead. These two supplementary controls may work as a secondary control, with relative slow control speed compared to the main control loop. For multiply GFM converters connected in parallel, the secondary control can send references simultaneously to the paralleled converters as a master to avoid asynchronization between the converters. The secondary balancing control may be limited by the converter maximum current.

Fig. 11 shows secondary controller (this may be the same as in figs. 2 and/or 3): grid current balancing (left) and PCC voltage balancing (right). The secondary control may get current or voltage measurements as input and may output back EMF voltages (as shown in fig. 11).

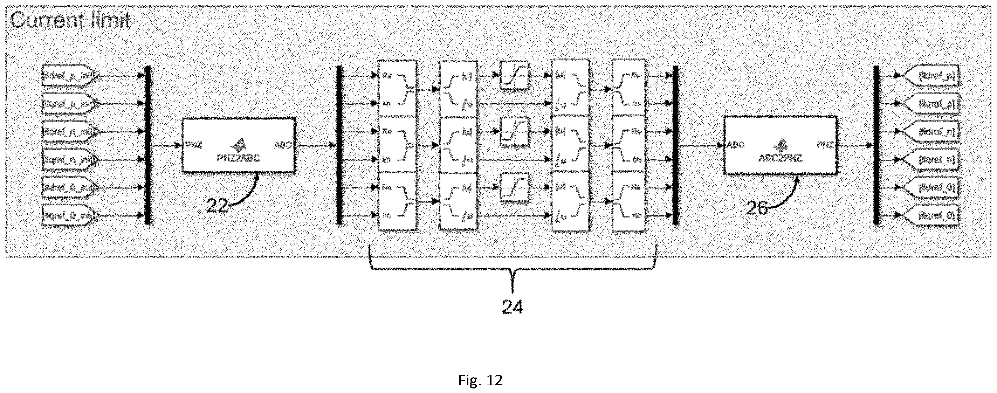

Fig. 12 shows a converter current limiting method for each sequence according to an embodiment of the disclosure. The initial current references (arrows with text on the left: il d/q ref_p/n/0_init) are transformed from Dual-dq0 to Phasor-ABC components (at 22) The Phasor-ABC components are the real and imaginary parts of three phase phasors. Then a saturation can be set of the magnitude of each phase for current limiting (at 24) and the adjusted references are transformed back to Dual-dq0 components for control loops (at 26) - outputting (final) current references (il d/q ref_p/n/0 represented by arrows with text on the right). This method as shown in fig. 12 may be implemented by the inner current loop/current control loop.

With the GFM controller connected to an unbalanced AC system in the Dual-dq0 reference frame, the converter system may work in grid-connected mode and may work in islanded mode, with ensuring the grid current balancing or PCC voltage balancing. The equally power sharing between paralleled converters is also achieved.

### 1.3.2 Grid forming control in Phasor-ABC reference frame

This section describes the grid forming (GFM) controller connected to an unbalanced AC system in the Phasor-ABC reference frame. The current and voltage measurements (may be measurements from current measurement and voltage measurement as shown in and for fig. 2) from the main power circuit in the power converter system are transformed to 6-dimentioanl phasor components, based on which the GFM controller is developed.

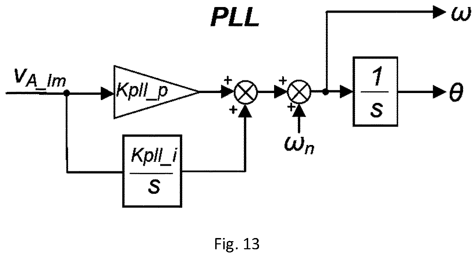

Fig. 13 shows a PLL. It may show a more detailed version of the PLL of fig. 6.

$\omega_n$ is the nominal angle frequency. $\omega_n$=2*pi*f. For an exemplary 50Hz AC system, $\omega_n$=100pi; For an exemplary 60Hz AC system, $\omega_n$=120pi. Kpll_p and Kpll_i are the gain of the PI (proportional integral) controller. The control parameters may be tuned to have good system stability and dynamics.

Fig. 14 shows transformers for transformations between main circuit and controller. The transformers may transform between the reference system according to the formulas as shown in the end of this description.

The PLL in the GFM controller is used to synchronize with phase A of PCC voltage, as shown in Fig. 13. The imaginary part of the "A" phase of the voltage signal may be input. The output are frequency ($\omega$) and angle ($\theta$) used by the controller to synchronize with grid, where $\theta$ is used for transformation between abc reference frame and Phasor-ABC reference frame (the angle ($\theta$) shown in fig. 9 corresponds in the example of equation (8) to $\omega*t$). The voltage and current measurements from the main circuit are in abc reference frame, which should be transformed to Phasor-ABC reference frame for controller design; on the other hand, the converter output voltage is in Phasor-ABC reference frame which should be transformed to abc reference frame to integrate with main circuit, as shown in Fig. 14. Once the rotating frame for phase A is synchronized, the rotating frames for phase B and C are also determined by phase shift of $\pm2/3\pi$.

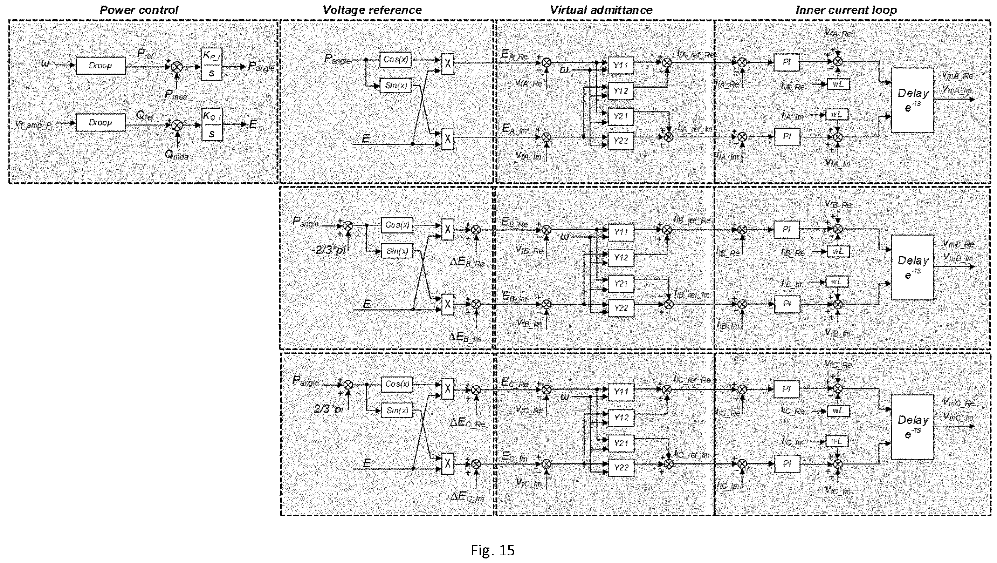

Fig. 15 shows a GFM controller connected to an unbalanced AC system in the Phasor-ABC reference frame. The power references ($P_{ref}$, $Q_{ref}$) may come from grid dispatching or droop control in islanded operation. Note that the power references are the reference value of three phases. The power control emulates a symmetrical virtual back EMF voltage as a synchronous generator, thus providing equal voltage amplitude and $2/3\pi$ phase-shift to three phases. The symmetrical back EMF voltage is then connected to a virtual admittance and an inner current loop, where the control structures are identical for three phases while the control parameters could be different, for example, the virtual admittance for individual phase could be different to compensate the unbalanced voltage drop on LC filters and make a balanced PCC voltage. Moreover, the identical virtual admittance for specific phase in paralleled converters can contribute to an equal power sharing among the paralleled converters, regardless of the difference between the LC filters/line impedances. The inner current loops are used to control the individual phase current. Thus, it is very easy to implement to have current saturation on each phase.

The virtual admittance may be the voltage controller as described before. The virtual admittance may be provided (input) with voltage measurements ($v_{fA\_Re}$, etc.; measurements may be acquired as shown in figs. 2 and 7) and frequency ($\omega$) which may be provided by the PLL. The virtual admittance outputs reference current values ($i_{IA\_ref\_Re}$, etc.) to the inner current loop (where it is used as input). The inner current loop may also be provided (input) with current measurements ($i_{IA\_Re}$, etc.; measurements may be acquired as shown in figs. 2 and 7). The inner current loop then outputs the converter output AC voltage ($V_{mA\_Re}$, $V_{mA\_Im}$, etc.). This may be further converted to the abc reference frame to make the converter output AC voltage in the abc reference frame ($V_{mabc}$). The inner current loop comprises a delay part. The 'delay' refers the time delay between the output and input signal, which is caused by the measurement delay, signal transport, and controller computation, modulation, etc. Here a total time delay is applied to modulation voltage $V_m$ considering all the delays together. T may be time in seconds. s may be the laplace operator.

With this GFM controller connected to an unbalanced AC system, the converter will always emulate a symmetrical AC voltage no matter how imbalanced the grid is. This is the basic GFM control algorithm. If the converter is required to further compensate an unbalanced load current to ensure a balanced grid current or balanced PCC voltage, a supplementary secondary control is also equipped as shown in Fig. 16. The secondary control can be either a grid current balancing control or a PCC voltage balancing control (see also fig. 16). In the balancing control, the phase B and C grid current/PCC voltage may be controlled to have equal amplitude and $\pm2/3\pi$ phase-shift relative to phase A to generate an additional part of EMF voltage reference of phase B and C. These two supplementary controls may work as a secondary controller, with relative slow control speed compared to the main control loop. For multiply GFM converters connected in parallel, the secondary control may send references simultaneously to the paralleled converters as a master to avoid asynchronization between the converters. Similarly, the secondary balancing control may be limited by the converter maximum current.

Fig. 16 shows secondary controller (this may be the same as in figs. 2 and/or 5): grid current balancing (left) and PCC voltage balancing (right). The secondary control may get current or voltage measurements as input and may output back EMF voltages (as shown in fig. 16).

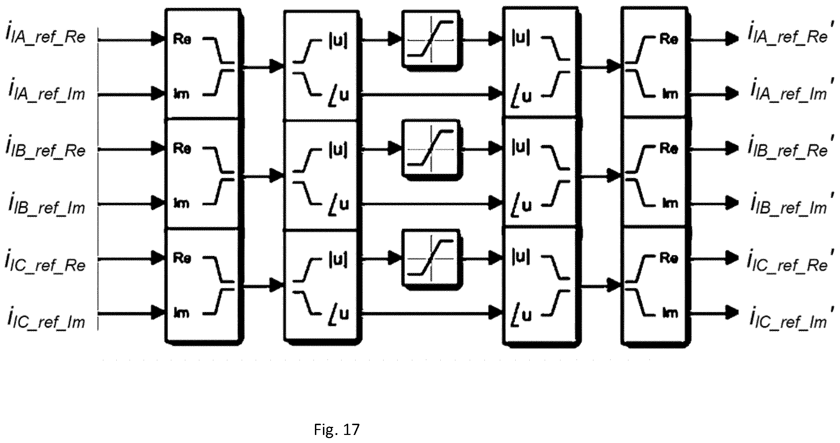

Fig. 17 shows a converter current limiting method for each phase according to an embodiment of the disclosure. Since the inner current loops are used to control the individual phase current, thus, it is very straightforward to have current saturation on each phase. The input is shown by the arrows with text on the left: ($i_{IA\_ref\_Re}$, etc.). The real and imaginary parts of the initial current references are used to compute the magnitude of each phase. Then a saturation can be set to the magnitude of each phase for current limiting and the adjusted amplitudes are sent to compute real and imaginary parts of current references - outputting (final) current references ($i_{IA\,ref\_Re}$, etc. represented by arrows with text on the right). This method as shown in fig. 17 may be implemented by the inner current loop/current control loop.

With the GFM controller connected to an unbalanced AC system in the Phasor-ABC reference frame, the converter system may work in grid-connected mode and may work in islanded mode, with ensuring the grid current balancing or PCC voltage balancing. The equally power sharing between paralleled converters is also achieved.

**2. Benefits**

With the GFM controller connected to an unbalanced AC system developed in Dual-dq0 reference frame, the following benefits may be obtained:

- Grid forming capability of converter system under unbalanced AC system.
- Control of the individual sequence (positive, negative and zero sequence) respectively. It is feasible to have full control all the sequences.
- Converter operation in both grid-connected operation and islanded operation, between which the seamless switch is also obtained.
- Parallel operation to build up capacity with equally power sharing between paralleled converters.
- Balancing control is straightforward to implement by setting negative and zero sequence components to zero, e.g., grid current balancing or PCC voltage balancing control under unbalanced load.
- Current saturation is implemented by transforming the sequence components to Phasor-ABC components and the saturation is applied to each phase.

With the GFM controller connected to an unbalanced AC system developed in Phasor-ABC reference frame, the following benefits may be obtained:

- Grid forming capability of converter system under unbalanced AC system.
- Control of the individual phase (phase A, B and C) respectively. It is feasible to have full control all the phases.
- Converter operation in both grid-connected operation and islanded operation, between which the seamless switch is also obtained.
- Parallel operation to build up capacity with equally power sharing between paralleled converters.
- Current saturation is straightforward to implement by limiting the amplitude of each phase.
- Balancing control is implemented by controlling phase B and C to have to have equal amplitude and $\pm 2/3\pi$ phase-shift relative to phase A.

**3. Formulas**

**3.1 Generalized transformation between abc reference frame and Phasor-ABC reference frame**

No matter whether the AC system is symmetrical or not, a three-phase AC signal can be generally expressed as:

$$\begin{bmatrix} \tilde{x}_a(t) \\ \tilde{x}_b(t) \\ \tilde{x}_c(t) \end{bmatrix} = \begin{bmatrix} X_a \cdot cos\left(\omega t + \varphi_{a0}\right) \\ X_b \cdot cos\left(\omega t + \varphi_{b0}\right) \\ X_c \cdot cos\left(\omega t + \varphi_{c0}\right) \end{bmatrix} \tag{1}$$

Where $X_a$, $X_b$, $X_c$ are the amplitudes of phase a, b, c respectively, $\omega$ is the common frequency, $\varphi_{a0}$, $\varphi_{b0}$, $\varphi_{c0}$ are the initial phase angles of phase a, b, c respectively.

By delaying the above three-phase signal for 1/4 period, there is:

$$\begin{bmatrix} \tilde{x}_a\left(t - \frac{\pi}{2\omega}\right) \\ \tilde{x}_b(t - \frac{\pi}{2\omega}) \\ \tilde{x}_c(t - \frac{\pi}{2\omega}) \end{bmatrix} = \begin{bmatrix} X_a \cdot cos\left(\omega t + \varphi_{a0} - \frac{\pi}{2}\right) \\ X_b \cdot cos\left(\omega t + \varphi_{b0} - \frac{\pi}{2}\right) \\ X_c \cdot cos\left(\omega t + \varphi_{c0} - \frac{\pi}{2}\right) \end{bmatrix} \tag{2}$$

Forming them together, yields:

$$\begin{bmatrix} \tilde{x}_a(t) \\ \tilde{x}_a\left(t - \dfrac{\pi}{2\omega}\right) \\ \tilde{x}_b(t) \\ \tilde{x}_b\left(t - \dfrac{\pi}{2\omega}\right) \\ \tilde{x}_c(t) \\ \tilde{x}_c\left(t - \dfrac{\pi}{2\omega}\right) \end{bmatrix} = \begin{bmatrix} X_a \cdot \cos\left(\omega t + \varphi_{a0}\right) \\ X_a \cdot \cos\left(\omega t + \varphi_{a0} - \dfrac{\pi}{2}\right) \\ X_b \cdot \cos\left(\omega t + \varphi_{b0}\right) \\ X_b \cdot \cos\left(\omega t + \varphi_{b0} - \dfrac{\pi}{2}\right) \\ X_c \cdot \cos\left(\omega t + \varphi_{c0}\right) \\ X_c \cdot \cos\left(\omega t + \varphi_{c0} - \dfrac{\pi}{2}\right) \end{bmatrix} \tag{3}$$

By defining a transformation matrix as follows, a virtual Phasor-ABC reference frame transforms the symmetrical or unsymmetrical three phase AC signals into constant components, in the form of equation (5). It is noted that equation 4 separately transforms each phase-pair (see 2x2 blocks, everything else is 0).

$$T_{abc2ABC} = \begin{bmatrix} \cos(\omega t) & \sin(\omega t) & 0 & 0 & 0 & 0 \\ -\sin(\omega t) & \cos(\omega t) & 0 & 0 & 0 & 0 \\ 0 & 0 & \cos(\omega t) & \sin(\omega t) & 0 & 0 \\ 0 & 0 & -\sin(\omega t) & \cos(\omega t) & 0 & 0 \\ 0 & 0 & 0 & 0 & \cos(\omega t) & \sin(\omega t) \\ 0 & 0 & 0 & 0 & -\sin(\omega t) & \cos(\omega t) \end{bmatrix} \tag{4}$$

$$\begin{bmatrix} Re(\bar{x}_a) \\ Im(\bar{x}_a) \\ Re(\bar{x}_b) \\ Im(\bar{x}_b) \\ Re(\bar{x}_c) \\ Im(\bar{x}_c) \end{bmatrix} = T_{abc2ABC} \cdot \begin{bmatrix} \tilde{x}_a(t) \\ \tilde{x}_a\left(t - \dfrac{\pi}{2\omega}\right) \\ \tilde{x}_b(t) \\ \tilde{x}_b\left(t - \dfrac{\pi}{2\omega}\right) \\ \tilde{x}_c(t) \\ \tilde{x}_c\left(t - \dfrac{\pi}{2\omega}\right) \end{bmatrix} \tag{5}$$

Where, $T_{abc2ABC}$ is the transformation matrix from Phasor-ABC reference frame to stationary abc reference frame; $\bar{x}_a$, $\bar{x}_b$, $\bar{x}_c$ are the stationary phasors of phase a, b, c respectively in the Phasor-ABC reference frame, which can be expressed by:

$$\begin{cases} \bar{x}_a = X_a \cdot \cos(\varphi_{a0}) + jX_a \sin(\varphi_{a0}) = X_a e^{j\varphi_{a0}} \\ \bar{x}_b = X_b \cdot \cos(\varphi_{b0}) + jX_b \sin(\varphi_{b0}) = X_b e^{j\varphi_{b0}} \\ \bar{x}_c = X_c \cdot \cos(\varphi_{c0}) + jX_c \sin(\varphi_{c0}) = X_c e^{j\varphi_{c0}} \end{cases} \tag{6}$$

$$\begin{bmatrix} Re(\bar{x}_a) \\ Im(\bar{x}_a) \\ Re(\bar{x}_b) \\ Im(\bar{x}_b) \\ Re(\bar{x}_c) \\ Im(\bar{x}_c) \end{bmatrix} = \begin{bmatrix} X_a \cdot \cos(\varphi_{a0}) \\ X_a \cdot \sin(\varphi_{a0}) \\ X_b \cdot \cos(\varphi_{b0}) \\ X_b \cdot \sin(\varphi_{b0}) \\ X_c \cdot \cos(\varphi_{c0}) \\ X_c \cdot \sin(\varphi_{c0}) \end{bmatrix} \tag{7}$$

At the stable operating point, $X_a$, $X_b$, $X_c$, $\varphi_{ao}$, $\varphi_{bo}$, $\varphi_{co}$ are all constant. From above derivations, it can be seen that with a combination of the original sinusoidal signal and its T/4-delayed signal, a dynamic phasor can be formed with a constant amplitude and a constant phase angle in steady state in a rotating reference frame, which is defined as Phasor-ABC reference frame, thus making it feasible to convert a sinusoidal signal into a linear time invariant (LTI) representation.

The inverse transformation matrix from the Phasor-ABC reference frame to abc reference frame is:

$$T_{ABC2abc} = \begin{bmatrix} cos\ (\omega t) & -sin\ (\omega t) & 0 & 0 & 0 & 0 \\ sin\ (\omega t) & cos\ (\omega t) & 0 & 0 & 0 & 0 \\ 0 & 0 & cos\ (\omega t) & -sin\ (\omega t) & 0 & 0 \\ 0 & 0 & sin\ (\omega t) & cos\ (\omega t) & 0 & 0 \\ 0 & 0 & 0 & 0 & cos\ (\omega t) & -sin\ (\omega t) \\ 0 & 0 & 0 & 0 & sin\ (\omega t) & cos\ (\omega t) \end{bmatrix} \quad (8)$$

By using (8), the phasor components in Phasor-ABC reference frame can be transformed to abc reference frame:

$$\begin{bmatrix} \tilde{x}_a(t) \\ \tilde{x}_a\left(t - \frac{\pi}{2\omega}\right) \\ \tilde{x}_b(t) \\ \tilde{x}_b(t - \frac{\pi}{2\omega}) \\ \tilde{x}_c(t) \\ \tilde{x}_c(t - \frac{\pi}{2\omega}) \end{bmatrix} = T_{ABC2abc} \cdot \begin{bmatrix} Re(\bar{x}_a) \\ Im(\bar{x}_a) \\ Re(\bar{x}_b) \\ Im(\bar{x}_b) \\ Re(\bar{x}_c) \\ Im(\bar{x}_c) \end{bmatrix} \quad (9)$$

### 3.2 Stationary abc reference frame and rotating Dual-dq0 reference frame

The unbalanced three-phase signal can be decomposed to positive, negative and zero sequence components. A virtual Dual-dq0 reference frame is proposed to transform sequence components to constant dq components.

$$\begin{bmatrix} \bar{x}_d^+ \\ \bar{x}_q^+ \\ \bar{x}_d^- \\ \bar{x}_q^- \\ \bar{x}_d^0 \\ \bar{x}_q^0 \end{bmatrix} = T_{abc2PNZ} \cdot \begin{bmatrix} \tilde{x}_a(t) \\ \tilde{x}_a\left(t - \frac{\pi}{2\omega}\right) \\ \tilde{x}_b(t) \\ \tilde{x}_b(t - \frac{\pi}{2\omega}) \\ \tilde{x}_c(t) \\ \tilde{x}_c(t - \frac{\pi}{2\omega}) \end{bmatrix} \quad (10)$$

$$T_{abc2PNZ} = \begin{bmatrix} \frac{cos(\omega t)}{3} & \frac{sin(\omega t)}{3} & -\frac{cos\left(\omega t + \frac{\pi}{3}\right)}{3} & -\frac{sin\left(\omega t + \frac{\pi}{3}\right)}{3} & -\frac{cos\left(\omega t - \frac{\pi}{3}\right)}{3} & \frac{cos\left(\omega t + \frac{\pi}{6}\right)}{3} \\ -\frac{sin(\omega t)}{3} & \frac{cos(\omega t)}{3} & \frac{sin\left(\omega t + \frac{\pi}{3}\right)}{3} & -\frac{cos\left(\omega t + \frac{\pi}{3}\right)}{3} & -\frac{cos\left(\omega t + \frac{\pi}{6}\right)}{3} & -\frac{cos\left(\omega t - \frac{\pi}{3}\right)}{3} \\ \frac{cos(\omega t)}{3} & \frac{sin(\omega t)}{3} & -\frac{cos\left(\omega t - \frac{\pi}{3}\right)}{3} & \frac{cos\left(\omega t + \frac{\pi}{6}\right)}{3} & -\frac{cos\left(\omega t + \frac{\pi}{3}\right)}{3} & -\frac{sin\left(\omega t + \frac{\pi}{3}\right)}{3} \\ \frac{sin(\omega t)}{3} & -\frac{cos(\omega t)}{3} & \frac{cos\left(\omega t + \frac{\pi}{6}\right)}{3} & \frac{cos\left(\omega t - \frac{\pi}{3}\right)}{3} & -\frac{sin\left(\omega t + \frac{\pi}{3}\right)}{3} & \frac{cos\left(\omega t + \frac{\pi}{3}\right)}{3} \\ \frac{cos(\omega t)}{3} & \frac{sin(\omega t)}{3} & \frac{cos(\omega t)}{3} & \frac{sin(\omega t)}{3} & \frac{cos(\omega t)}{3} & \frac{sin(\omega t)}{3} \\ -\frac{sin(\omega t)}{3} & \frac{cos(\omega t)}{3} & -\frac{sin(\omega t)}{3} & \frac{cos(\omega t)}{3} & -\frac{sin(\omega t)}{3} & \frac{cos(\omega t)}{3} \end{bmatrix} \quad (11)$$

Where $\bar{x}_d^+$ and $\bar{x}_q^+$ are the dq components of positive sequence; $\bar{x}_d^-$ and $\bar{x}_q^-$ are the dq components of negative sequence; $\bar{x}_d^0$ and $\bar{x}_q^0$ are the dq components of zero sequence in Dual-dq0 reference frame. With this Dual-dq0 transformation, the unsymmetrical three phase signal can be converted to constant dq components, which is LTI representation as well.

The inverse transformation from Dual-dq0 reference frame to abc reference frame is:

$$
\begin{bmatrix}
\tilde{x}_a(t) \\
\tilde{x}_a\left(t - \frac{\pi}{2\omega}\right) \\
\tilde{x}_b(t) \\
\tilde{x}_b\left(t - \frac{\pi}{2\omega}\right) \\
\tilde{x}_c(t) \\
\tilde{x}_c\left(t - \frac{\pi}{2\omega}\right)
\end{bmatrix}
= T_{PNZ2abc} \cdot
\begin{bmatrix}
\bar{x}_d^+ \\
\bar{x}_q^+ \\
\bar{x}_d^- \\
\bar{x}_q^- \\
\bar{x}_d^0 \\
\bar{x}_q^0
\end{bmatrix}
\tag{12}
$$

$$
T_{PNZ2abc} =
$$

$$
\begin{bmatrix}
\cos(\omega t) & -\sin(\omega t) & \cos(\omega t) & \sin(\omega t) & \cos(\omega t) & -\sin(\omega t) \\
\sin(\omega t) & \cos(\omega t) & \sin(\omega t) & -\cos(\omega t) & \sin(\omega t) & \cos(\omega t) \\
-\cos\left(\omega t + \frac{\pi}{3}\right) & \sin\left(\omega t + \frac{\pi}{3}\right) & -\cos\left(\omega t - \frac{\pi}{3}\right) & \cos\left(\omega t + \frac{\pi}{6}\right) & \cos(\omega t) & -\sin(\omega t) \\
-\sin\left(\omega t + \frac{\pi}{3}\right) & -\cos\left(\omega t + \frac{\pi}{3}\right) & \cos\left(\omega t + \frac{\pi}{6}\right) & \cos\left(\omega t - \frac{\pi}{3}\right) & \sin(\omega t) & \cos(\omega t) \\
-\cos\left(\omega t - \frac{\pi}{3}\right) & -\cos\left(\omega t + \frac{\pi}{6}\right) & -\cos\left(\omega t + \frac{\pi}{3}\right) & -\sin\left(\omega t + \frac{\pi}{3}\right) & \cos(\omega t) & -\sin(\omega t) \\
\cos\left(\omega t + \frac{\pi}{6}\right) & -\cos\left(\omega t - \frac{\pi}{3}\right) & -\sin\left(\omega t + \frac{\pi}{3}\right) & \cos\left(\omega t + \frac{\pi}{3}\right) & \sin(\omega t) & \cos(\omega t)
\end{bmatrix}
$$

$$(13)$$

### 3.3 Rotating Phasor-ABC reference frame and rotating Dual-dq0 reference frame

As introduced above, an unbalanced three-phase AC signal can be transformed into constant components either in Phasor-ABC reference frame or in Dual-dq0 reference frame. The transformation from Phasor-ABC reference frame to Dual-dq0 reference frame can be derived as:

$$
\begin{bmatrix}
\bar{x}_d^+ \\
\bar{x}_q^+ \\
\bar{x}_d^- \\
\bar{x}_q^- \\
\bar{x}_d^0 \\
\bar{x}_q^0
\end{bmatrix}
= T_{ABC2PNZ} \cdot
\begin{bmatrix}
Re(\bar{x}_a) \\
Im(\bar{x}_a) \\
Re(\bar{x}_b) \\
Im(\bar{x}_b) \\
Re(\bar{x}_c) \\
Im(\bar{x}_c)
\end{bmatrix}
\tag{14}
$$

$$
T_{ABC2PNZ} =
\begin{bmatrix}
\frac{1}{3} & 0 & -\frac{1}{6} & -\frac{\sqrt{3}}{6} & -\frac{1}{6} & \frac{\sqrt{3}}{6} \\
0 & \frac{1}{3} & \frac{\sqrt{3}}{6} & -\frac{1}{6} & -\frac{\sqrt{3}}{6} & -\frac{1}{6} \\
\frac{1}{3} & 0 & -\frac{1}{6} & \frac{\sqrt{3}}{6} & -\frac{1}{6} & -\frac{\sqrt{3}}{6} \\
0 & -\frac{1}{3} & \frac{\sqrt{3}}{6} & \frac{1}{6} & -\frac{\sqrt{3}}{6} & \frac{1}{6} \\
\frac{1}{3} & 0 & \frac{1}{3} & 0 & \frac{1}{3} & 0 \\
0 & \frac{1}{3} & 0 & \frac{1}{3} & 0 & \frac{1}{3}
\end{bmatrix}
\tag{15}
$$

On the other hand, the transformation from Dual-dq0 reference frame to Phasor-ABC reference frame is:

$$\begin{bmatrix} Re(\bar{x}_a) \\ Im(\bar{x}_a) \\ Re(\bar{x}_b) \\ Im(\bar{x}_b) \\ Re(\bar{x}_c) \\ Im(\bar{x}_c) \end{bmatrix} = T_{PNZ2ABC} \cdot \begin{bmatrix} \bar{x}_d^+ \\ \bar{x}_q^+ \\ \bar{x}_d^- \\ \bar{x}_q^- \\ \bar{x}_d^0 \\ \bar{x}_q^0 \end{bmatrix} \qquad (16)$$

$$T_{PNZ2ABC} = \begin{bmatrix} 1 & 0 & 1 & 0 & 1 & 0 \\ 0 & 1 & 0 & -1 & 0 & 1 \\ -\frac{1}{2} & \frac{\sqrt{3}}{2} & -\frac{1}{2} & \frac{\sqrt{3}}{2} & 1 & 0 \\ -\frac{\sqrt{3}}{2} & -\frac{1}{2} & \frac{\sqrt{3}}{2} & \frac{1}{2} & 0 & 1 \\ -\frac{1}{2} & -\frac{\sqrt{3}}{2} & -\frac{1}{2} & -\frac{\sqrt{3}}{2} & 1 & 0 \\ \frac{\sqrt{3}}{2} & -\frac{1}{2} & -\frac{\sqrt{3}}{2} & \frac{1}{2} & 0 & 1 \end{bmatrix} \qquad (17)$$

### 4. Methods

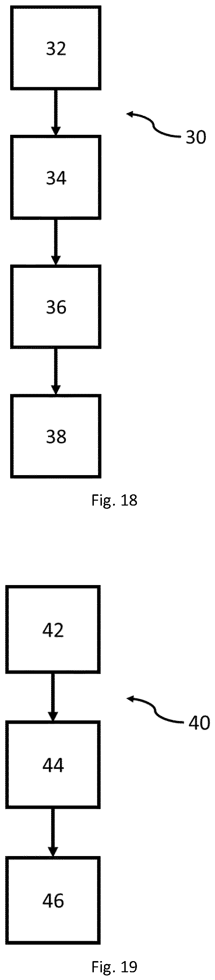

Fig. 18 shows a method 30 for controlling a power converter. The method 30 comprises several steps 32 to 38. In step 32, a first signal set comprising first phase signals is obtained at a port of the power converter. At step 34, a second signal set comprising second phase signals based on the first signal set is generated, wherein each second phase signal of the second signal set comprises a phase shift relative to a corresponding first phase signal of the first signal set. At step 36, each of the first phase signal and the corresponding second phase signal is separately transformed to generate a constant first intermediate signal set. At step 38, the power converter is controlled based on the constant first intermediate signal set.

Fig. 19 shows a method 40 for providing voltage signals in an alternating current system. The method 40 comprises steps 42 to 46. At step 42, a symmetrical virtual voltage emulating behaviour of a synchronous system is generating, by a power controller. At step 44, information about the symmetrical virtual voltage emulating behaviour to a first control loop, a second control loop and a third control loop is provided, by the power controller. At step 46, voltage by the first control loop, the second control loop and the third control loop is provided.

### 5. Backmatter

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A method for controlling a power converter, wherein the method comprises:

   obtaining a first signal set comprising first phase signals at a port of the power converter;
   generating a second signal set comprising second phase signals based on the first signal set, wherein each second phase signal of the second signal set comprises a phase shift relative to a corresponding first phase signal of the first signal set;
   separately transforming each of the first phase signal and the corresponding second phase signal to generate a constant first intermediate signal set; and
   controlling the power converter based on the constant first intermediate signal set.

2. Method according to claim 1, wherein the power converter is a voltage source converter, VSC.

3. Method according to claim 2, wherein the VSC is a grid-forming, GFM, VSC.

4. Method according to any one of claims 1 to 3, wherein the first signal set is unbalanced in amplitudes and/or phase shift.

5. Method according to any one of claims 1 to 4, wherein the phase shift is $\pi/2$ for the each second phase signals relative to the corresponding first phase signal.

6. Method according to any one of claims 1 to 5, wherein the first signal set is expressed as

$$\begin{bmatrix} \tilde{x}_a(t) \\ \tilde{x}_b(t) \\ \tilde{x}_c(t) \end{bmatrix} = \begin{bmatrix} X_a \cdot cos\,(\omega t + \varphi_{a0}) \\ X_b \cdot cos\,(\omega t + \varphi_{b0}) \\ X_c \cdot cos\,(\omega t + \varphi_{c0}) \end{bmatrix};$$

the second signal set is expressed as

$$\begin{bmatrix} \tilde{x}_a\left(t - \dfrac{\pi}{2\omega}\right) \\ \tilde{x}_b\left(t - \dfrac{\pi}{2\omega}\right) \\ \tilde{x}_c\left(t - \dfrac{\pi}{2\omega}\right) \end{bmatrix} = \begin{bmatrix} X_a \cdot cos\,\left(\omega t + \varphi_{a0} - \dfrac{\pi}{2}\right) \\ X_b \cdot cos\,\left(\omega t + \varphi_{b0} - \dfrac{\pi}{2}\right) \\ X_c \cdot cos\,\left(\omega t + \varphi_{c0} - \dfrac{\pi}{2}\right) \end{bmatrix};$$

a matrix for separately transforming each of the first phase signal and the corresponding second phase signal to generate a constant first intermediate signal set is expressed as

$$T_{abc2ABC} = \begin{bmatrix} cos\,(\omega t) & sin\,(\omega t) & 0 & 0 & 0 & 0 \\ -sin\,(\omega t) & cos\,(\omega t) & 0 & 0 & 0 & 0 \\ 0 & 0 & cos\,(\omega t) & sin\,(\omega t) & 0 & 0 \\ 0 & 0 & -sin\,(\omega t) & cos\,(\omega t) & 0 & 0 \\ 0 & 0 & 0 & 0 & cos\,(\omega t) & sin\,(\omega t) \\ 0 & 0 & 0 & 0 & -sin\,(\omega t) & cos\,(\omega t) \end{bmatrix};$$

and the matrix is applied on a combined vector of the first signal set and the second signal set, which is expressed as

$$\begin{bmatrix} \tilde{x}_a(t) \\ \tilde{x}_a\left(t - \dfrac{\pi}{2\omega}\right) \\ \tilde{x}_b(t) \\ \tilde{x}_b\left(t - \dfrac{\pi}{2\omega}\right) \\ \tilde{x}_c(t) \\ \tilde{x}_c\left(t - \dfrac{\pi}{2\omega}\right) \end{bmatrix} = \begin{bmatrix} X_a \cdot cos\left(\omega t + \varphi_{a0}\right) \\ X_a \cdot cos\left(\omega t + \varphi_{a0} - \dfrac{\pi}{2}\right) \\ X_b \cdot cos\left(\omega t + \varphi_{b0}\right) \\ X_b \cdot cos\left(\omega t + \varphi_{b0} - \dfrac{\pi}{2}\right) \\ X_c \cdot cos\left(\omega t + \varphi_{c0}\right) \\ X_c \cdot cos\left(\omega t + \varphi_{c0} - \dfrac{\pi}{2}\right) \end{bmatrix};$$

wherein $X_a$, $X_b$, $X_c$ are the amplitudes of phases a, b and c respectively, $\omega$ is a common frequency, $\varphi_{a0}$, $\varphi_{b0}$, $\varphi_{c0}$ are initial phase angles of phases a, b and c respectively.

7. Method according to any one of claims 1 to 6, wherein the first intermediate signal set comprises six phasor components.

8. Method according to claim 7, wherein the six phasor components have constant amplitudes and constant phase angles.

9. Method according to any one of the preceding claims, wherein constant amplitudes and constant phase angles comprises the amplitudes and phase angles to not change with respect to time in a certain time period.

10. Method according to claim 7, wherein the first signal set comprises a three-phased phase voltage, a three-phased line voltage, a three-phased phase current or a three-phased line current of an alternating current, AC, system.

11. Method according to any one of claims 1 to 10, wherein the constant first intermediate signal set establishes a first intermediate signal.

12. A computer program comprising instructions which, when the computer program is executed by a computer, cause the computer to carry out the method of any one of claims 1 to 11.

13. A power converter configured to implement the method according to any one of claims 1 to 11.

## abc reference frame

## Dual-dq0 reference frame

## Phasor ABC reference frame

Fig. 1

Fig. 2

Fig. 3

Fig. 4

Fig. 5

Fig. 6

Fig. 7

Fig. 8

## Transformation between abc and Dual-dq0 reference frame

Fig. 9

Fig. 10

EP 4 701 023 A1

Secondary control — grid current balancing

Secondary control — PCC voltage balancing

Fig. 11

Fig. 12

Fig. 13

# Transformation between abc and Phasor-ABC reference frame

Fig. 14

EP 4 701 023 A1

Fig. 15

## Secondary control – PCC voltage balancing

$V_{fA\_Re}, V_{fA\_Im} \rightarrow \boxed{e^{j(-120°)}} \rightarrow V_{fBref\_Re}, V_{fBref\_Im}$

$V_{fA\_Re}, V_{fA\_Im} \rightarrow \boxed{e^{j(120°)}} \rightarrow V_{fCref\_Re}, V_{fCref\_Im}$

$V_{fBref\_Re} \rightarrow (+/-) \otimes \rightarrow \boxed{PI} \rightarrow \Delta E_{B\_Re}$

$V_{B\_Re}$

$V_{fBref\_Im} \rightarrow (+/-) \otimes \rightarrow \boxed{PI} \rightarrow \Delta E_{B\_Im}$

$V_{B\_Im}$

$V_{fCref\_Re} \rightarrow (+/-) \otimes \rightarrow \boxed{PI} \rightarrow \Delta E_{C\_Re}$

$V_{C\_Re}$

$V_{fCref\_Im} \rightarrow (+/-) \otimes \rightarrow \boxed{PI} \rightarrow \Delta E_{C\_Im}$

$V_{C\_Im}$

## Secondary control – Grid current balancing

$i_{gA\_Re}, i_{gA\_Im} \rightarrow \boxed{e^{j(-120°)}} \rightarrow i_{gBref\_Re}, i_{gBref\_Im}$

$i_{gA\_Re}, i_{gA\_Im} \rightarrow \boxed{e^{j(120°)}} \rightarrow i_{gCref\_Re}, i_{gCref\_Im}$

$i_{gBref\_Re} \rightarrow (+/-) \otimes \rightarrow \boxed{PI} \rightarrow \Delta E_{B\_Re}$

$i_{gB\_Re}$

$i_{gBref\_Im} \rightarrow (+/-) \otimes \rightarrow \boxed{PI} \rightarrow \Delta E_{B\_Im}$

$i_{gB\_Im}$

$i_{gCref\_Re} \rightarrow (+/-) \otimes \rightarrow \boxed{PI} \rightarrow \Delta E_{C\_Re}$

$i_{gC\_Re}$

$i_{gCref\_Im} \rightarrow (+/-) \otimes \rightarrow \boxed{PI} \rightarrow \Delta E_{C\_Im}$

$i_{gC\_Im}$

Fig. 16

Fig. 17

Fig. 18

Fig. 19

Europäisches
Patentamt

European
Patent Office

Office européen
des brevets

## EUROPEAN SEARCH REPORT

**Application Number**

EP 24 19 5462

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IONEL VECHIU ET AL: "Transient Operation of a Four-Leg Inverter for Autonomous Applications With Unbalanced Load", IEEE TRANSACTIONS ON POWER ELECTRONICS, INSTITUTE OF ELECTRICAL AND ELECTRONICS ENGINEERS, USA, vol. 24, no. 2, 1 February 2010 (2010-02-01), pages 399-407, XP011282327, ISSN: 0885-8993 | 1,4-13 | INV.<br>H02J3/26<br>H02J3/38<br>H02M7/5387 |
| Y | * abstract *<br>* figures 1,3,5,6,7,8,9,10,11,14,15,16,17,18,19 *<br>* Equations 7 and 8 *<br>* Sections: III, III A, III B, III C, III D and IV *<br>----- | 2,3 | |
| Y | LU MINGHUI ET AL: "Spontaneous Phase Balancing in Delta-Connected Single-Phase Droop-Controlled Inverters", IEEE TRANSACTIONS ON POWER ELECTRONICS, INSTITUTE OF ELECTRICAL AND ELECTRONICS ENGINEERS, USA, vol. 37, no. 12, 24 June 2022 (2022-06-24), pages 14115-14125, XP011918958, ISSN: 0885-8993, DOI: 10.1109/TPEL.2022.3186337 [retrieved on 2022-06-27]<br>* abstract *<br>* figures 1, 2, 4, 6, 12, 14 *<br>* Sections: II, III, IV and V *<br>----- | 2,3 | TECHNICAL FIELDS SEARCHED (IPC)<br><br>H02J<br>H02M |

-/--

The present search report has been drawn up for all claims

| Place of search | Date of completion of the search | Examiner |
|---|---|---|
| Munich | 7 December 2024 | Oiring, Vinicius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

page 1 of 3

Europäisches
Patentamt
European
Patent Office
Office européen
des brevets

**EUROPEAN SEARCH REPORT**

Application Number

EP 24 19 5462

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHAH CHINMAY ET AL: "Review of Dynamic and Transient Modeling of Power Electronic Converters for Converter Dominated Power Systems", IEEE ACCESS, IEEE, USA, vol. 9, 4 June 2021 (2021-06-04), pages 82094-82117, XP011860198, DOI: 10.1109/ACCESS.2021.3086420 [retrieved on 2021-06-09] * abstract * * tables 1, 2 * * figures 1, 2, 4 * * Sections: II, III, III.B, III.B.1 and III.B.1.a * | 9 | |
| A | ROSSO ROBERTO ET AL: "Grid-forming converters: an overview of control approaches and future trends", 2020 IEEE ENERGY CONVERSION CONGRESS AND EXPOSITION (ECCE), IEEE, 11 October 2020 (2020-10-11), pages 4292-4299, XP033851213, DOI: 10.1109/ECCE44975.2020.9236211 [retrieved on 2020-10-21] * abstract * * figures 1, 2, 3, 4, 5, 6 and 7 * * Sections: II, III and IV * | 1,10 | |
| | -/-- | | **TECHNICAL FIELDS SEARCHED (IPC)** |

The present search report has been drawn up for all claims

| Place of search | Date of completion of the search | Examiner |
|---|---|---|
| Munich | 7 December 2024 | Oiring, Vinicius |

page 2 of 3

Europäisches
Patentamt

European
Patent Office

Office européen
des brevets

# EUROPEAN SEARCH REPORT

**Application Number**

EP 24 19 5462

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BORRELL ANGEL ET AL: "Collaborative Voltage Unbalance Compensation in Islanded AC Microgrids With Grid-Forming Inverters", IEEE TRANSACTIONS ON POWER ELECTRONICS, INSTITUTE OF ELECTRICAL AND ELECTRONICS ENGINEERS, USA, vol. 37, no. 9, 25 April 2022 (2022-04-25), pages 10499-10513, XP011909517, ISSN: 0885-8993, DOI: 10.1109/TPEL.2022.3169830 [retrieved on 2022-04-25] * abstract * * figures 1, 2, 3, 5, 6, 7, 8, 9, 10 * * Sections: III, IV and V * ----- | 4,10 | |
| | | | **TECHNICAL FIELDS SEARCHED (IPC)** |

The present search report has been drawn up for all claims

| Place of search | Date of completion of the search | Examiner |
|---|---|---|
| Munich | 7 December 2024 | Oiring, Vinicius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)